(19)

Europäisches Patentamt
European Patent Office
Office européen des brevets

(11)  **EP 2 589 935 A2**

(12)  **EUROPEAN PATENT APPLICATION**

(43)  Date of publication:
     **08.05.2013  Bulletin 2013/19**

(51)  Int Cl.:
     ***G01D 5/20*** (2006.01)

(21)  Application number: **12189002.4**

(22)  Date of filing: **18.10.2012**

| | |
|---|---|
| (84)  Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30)  Priority:  **04.11.2011  JP 2011241988**<br><br>(71)  Applicant: **JTEKT Corporation**<br>**Osaka-shi, Osaka 542-8502 (JP)** | (72)  Inventors:<br>• **Ura, Noritake**<br>  **Osaka-shi, Osaka 542-8502 (JP)**<br>• **Murakoshi, Yutaka**<br>  **Osaka-shi, Osaka 542-8502 (JP)**<br><br>(74)  Representative: **Winter, Brandl, Fürniss, Hübner, Röss, Kaiser, Polte - Partnerschaft**<br>**Bavariaring 10**<br>**80336 München (DE)** |

(54)  **Rotation angle detection device and torque sensor**

(57)     A torque sensor (14) computes a steering torque applied to a steering wheel on the basis of a difference between a rotation angle of an input shaft (20), which is detected using a first resolver (40), and a rotation angle of a lower shaft (21), which is detected using a second resolver (50). A planetary gear mechanism (60) that includes a sun gear (61) that rotates together with the input shaft (20), a planetary gear (63) that is made of a magnetic material and that revolves around the sun gear (61) and an internal gear (62) that is in mesh with the planetary gear (63) is provided. A rotation angle of the input shaft (20) and a position of the planetary gear (63) are detected on the basis of voltage signals output from the first resolver (40), and a steering angle of the steering wheel is obtained on the basis of the detected rotation angle and the detected position.

Fig. 2

**Description**

BACKGROUND OF THE INVENTION

1. Field of the Invention

The invention relates to a rotation angle detection device that is able to detect the absolute rotation angle of a rotary body even when the rotation angle is larger than or equal to 360 degrees, and relates also to a torque sensor. 2. Discussion of Background

There is a so-called power steering system that assists a driver's steering operation by applying assist torque to a steering system of a vehicle. A power steering system described in Japanese Patent Application Publication No. 2004-245642 (JP 2004-245642 A) includes a torque sensor and an electric motor. The torque sensor detects a steering torque that is applied to a steering shaft in response to a driver's operation of a steering wheel. The electric motor applies assist torque to the steering shaft. The steering shaft is configured such that an input shaft coupled to the steering wheel and a lower shaft coupled to steered wheels of a vehicle via, for example, a rack shaft are coupled to each other via a torsion bar. The torque sensor detects the rotation angle of the input shaft and the rotation angle of the lower shaft with the use of rotation angle sensors, and detects a steering torque applied to the steering shaft on the basis of the difference between the detected rotation angles of the respective shafts. In the power steering system described in JP 2004-245642 A, by controlling a driving amount of the electric motor on the basis of the steering torque detected by the torque sensor, assist force is applied to the steering shaft.

In addition, in the power steering system described in JP 2004-245642 A, a rotation speed detection unit that detects the rotational speed of the lower shaft is provided, and the absolute steering angle of multiple-turn rotation of the steering wheel is detected on the basis of the rotational speed of the lower shaft, which is detected by the rotation speed detection unit, and the rotation angle of the lower shaft, which is detected with the use of the torque sensor. Thus, by utilizing the steering angle of the steering wheel, which is detected with the use of the torque sensor, it is possible to execute, for example, an electronic stability control, a parking assist control. This enhances the convenience.

In the torque sensor described in JP 2004-245642 A, in order to detect the steering angle of the steering wheel, the rotation speed detection unit that detects the rotational speed of the lower shaft is required. This is one of the factors that complicate the structure of the torque sensor and consequently increase the cost.

Note that such a problem occurs not only in a torque sensor that is able to detect the steering angle of the steering wheel but also in a rotation angle detection device that detects the absolute rotation angle when a rotary body is rotated 360 degrees or more.

SUMMARY OF THE INVENTION

The invention provides a simply-structured rotation angle detection device that is able to detect the absolute rotation angle even when a rotary body is rotated 360 degrees or more, and also provides a torque sensor.

According to a feature of an example of the invention, an absolute rotation angle of a rotary body is detected with the use of a planetary gear mechanism.

BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:

FIG. 1 is a block diagram that schematically shows an electric power steering system for a vehicle;
FIG. 2 is a sectional view that shows the sectional structure of a torque sensor according to an embodiment of the invention;
FIG. 3 is a sectional view taken along the line A-A in FIG. 2;
FIG. 4 is a sectional view taken along the line B-B in FIG. 2;
FIG. 5 is a sectional view taken along the line C-C in FIG. 2;
FIG. 6 is a sectional view that shows a method of assembling the torque sensor according to the embodiment;
FIG. 7 is a table that shows an example of outputs from a first resolver provided in the torque sensor according to the embodiment;
FIG. 8 is a table that shows another example of outputs from the first resolver provided in the torque sensor according to the embodiment;
FIG. 9 is a flowchart that shows the procedure of a process of computing a steering angle of a steering wheel with the use of the torque sensor according to the embodiment;
FIG. 10 is a table that shows an example of outputs from the first resolver in a torque sensor according to an alternative embodiment of the invention;
FIG. 11 is a sectional view that shows the sectional structure of the torque sensor according to the alternative embodiment of the invention;
FIG. 12 is a sectional view that shows the sectional structure of a torque sensor according to another alternative embodiment of the invention; and
FIG. 13 is a plan view that shows an example of a rotation angle detection device according to the invention.

DETAILED DESCRIPTION OF EMBODIMENTS

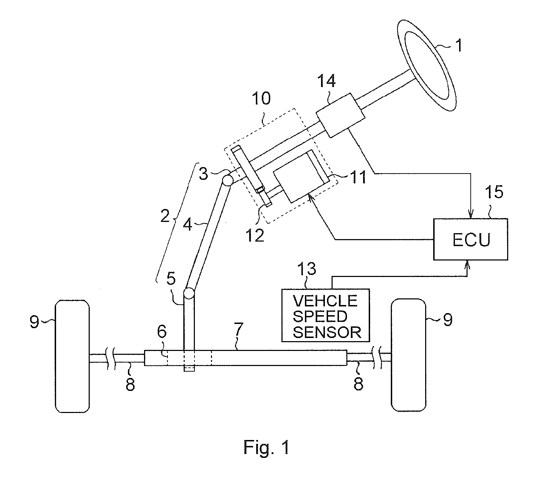

Hereinafter, a torque sensor according to an embodiment of the invention will be described with reference to FIG. 1 to FIG. 9. In the embodiment, the torque sensor according to the invention is used as a torque sensor of an electric power steering system for a vehicle.

As shown in FIG. 1, when a steering wheel 1 is operated by a driver, a steering shaft 2 rotates on the basis of a steering force applied to the steering wheel 1. The steering shaft 2 is formed of a column shaft 3, an intermediate shaft 4 and a pinion shaft 5. The rotation of the steering shaft 2 is converted into a linear motion of a rack shaft 7 via a rack-and-pinion mechanism 6. The reciprocal linear motion of the rack shaft 7 is transmitted to steered wheels 9 via tie rods 8 coupled to respective ends of the rack shaft 7. As a result, the steered angle of the steered wheels 9 is changed.

In the thus configured vehicle, an electric power steering system 10 according to the present embodiment is structured such that an electric motor 11 is coupled to the column shaft 3 via a speed reduction mechanism 12. The electric power steering system 10 reduces the speed of rotation of the electric motor 11 with the use of the speed reduction mechanism 12 and then transmits the rotation with a reduced speed to the column shaft 3. In this way, motor torque is applied to the steering system as assist force.

In addition, the vehicle includes various sensors that detect the state of the vehicle and the operation amount of the steering wheel 1. For example, the vehicle includes a vehicle speed sensor 13 that detects a vehicle speed. In addition, a torque sensor 14 is provided on the steering shaft 2. The torque sensor 14 detects a torque that acts on the shaft 2, that is, a steering torque applied to the steering wheel 1 by the driver. The torque sensor 14 is used to detect the rotation angle (including an absolute rotation angle that is larger than or equal to 360 degrees) of the steering shaft 2, that is, the steering angle of the steering wheel 1. The outputs from these sensors 13, 14 are input into an ECU 15. The ECU 15 is mainly formed of a microcomputer, and collectively controls driving of the electric motor 11. The ECU 15 calculates a target torque that is a target value of steering torque that is applied by the driver on the basis of the vehicle speed and steering torque detected by the sensors, and executes feedback control on a current that is supplied to the electric motor 11 such that the steering torque detected by the torque sensor 14 coincides with the target torque.

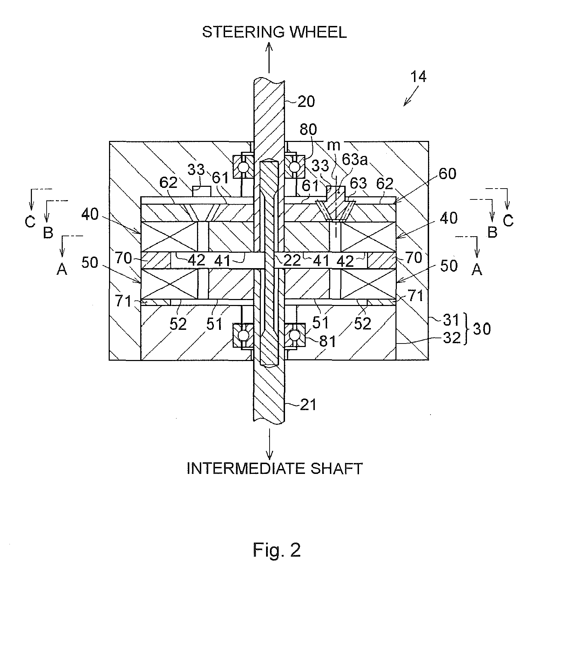

Next, the structure of the torque sensor 14 will be described in detail with reference to FIG. 2. As shown in FIG. 2, the column shaft 3 to which the torque sensor 14 is fitted is configured such that an input shaft 20 that may function as a first rotary body and a lower shaft 21 that may function as a second rotary body are coupled to each other via a torsion bar 22 along the same axis. The input shaft 20 is rotatably supported by a bearing 80 provided in an upper portion of a housing 30. The upper end portion of the input shaft 20 is coupled to the steering wheel 1. The lower shaft 21 is rotatably supported by a bearing 81 provided in a lower portion of the housing 30. The lower end portion of the lower shaft 21 is coupled to the intermediate shaft 4. With this configuration, when steering force applied to the steering wheel 1 by the driver is transmitted to the input shaft 20, the torsion bar 22 is twisted and deformed when the steering torque is transmitted to the lower shaft 21 via the torsion bar 22. That is, a rotation angular difference based on the steering torque is generated between the input shaft 20 and the lower shaft 21.

The housing 30 is formed of a box-shaped first housing 31 and a second housing 32. The bearing 80 is provided in the first housing 31, and the lower side of the first housing 31 is open. The bearing 81 is provided in the second housing 32, and the second housing 32 closes the opening of the first housing 31. In this way, by forming the housing 30 as a splittable member formed of two portions, it is easy to assemble the housing 30. The torque sensor 14 is accommodated inside the housing 30. The torque sensor 14 includes a first resolver 40 and a second resolver 50. The first resolver 40 may function as a first rotation angle detection device that detects the rotation angle of the input shaft 20. The second resolver 50 may function as a second rotation angle detection device that detects the rotation angle of the lower shaft 21.

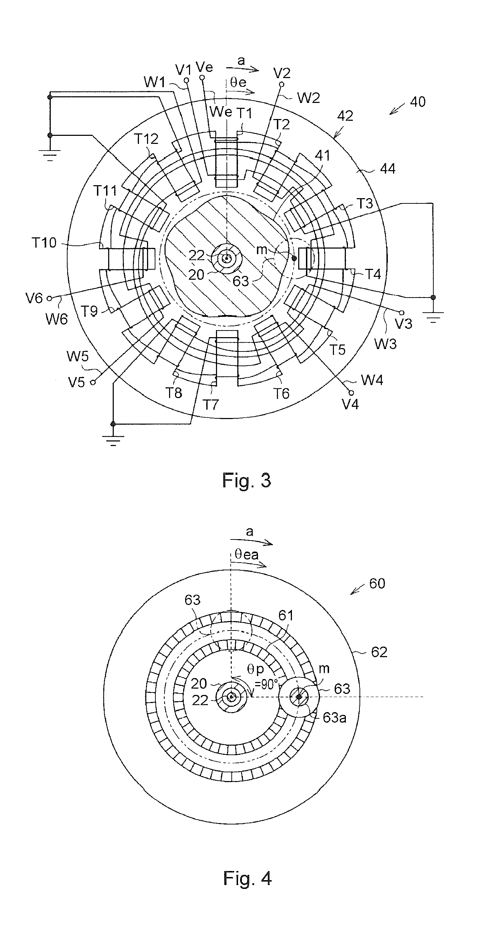

The first resolver 40 is formed of a rotor 41 and an annular stator 42. The rotor 41 is fixed to the lower end portion of the input shaft 20, and rotates together with the input shaft 20. The stator 42 is fixed to the housing 30, and surrounds the rotor 41. The rotor 41 is made of a magnetic material. As shown in FIG. 3, five bulge portions are formed on the outer periphery of the rotor 41. That is, the multiplication factor of angle of the first resolver 40 is set to "5X". Note that the housing 30 is not shown in FIG. 3. The stator 42 is formed of a stator core 44, an exciting winding coil We and six output winding coils W1 to W6. The stator core 44 is made of a magnetic material, and has twelve teeth T1 to T12 at angular intervals of 30° such that the teeth T1 to T12 face the rotor 41. The exciting winding coil We and the six output winding coils W1 to W6 are wound around these teeth T1 to T12 as described in the following (a1) to (a7).

(a1) The exciting winding coil We is wound around all the teeth T1 to T12.
(a2) The first output winding coil W1 is wound around the tooth T1 and the tooth T7 that faces the tooth T1.
(a3) The second output winding coil W2 is wound around the tooth T2 and the tooth T8 that faces the tooth T2.
(a4) The third output winding coil W3 is wound around the tooth T5 and the tooth T11 that faces the tooth T5.
(a5) The fourth output winding coil W4 is wound around the tooth T6 and the tooth T12 that faces the tooth T6.

(a6) The fifth output winding coil W5 is wound around the tooth T9 and the tooth T3 that faces the tooth T9.

(a7) The sixth output winding coil W6 is wound around the tooth T10 and the tooth T4 that faces the tooth T10.

In the first resolver 40, when an exciting voltage Ve (= E×sin(ωt)) is applied to the exciting winding coil We, alternating fields are respectively applied from the exciting winding coil We to the output winding coils W1 to W6. "E" denotes amplitude, "ω" denotes angular frequency, and "t" denotes time. On the other hand, when the rotor 41 rotates, distances between the rotor 41 and the teeth T1 to T12 change on the basis of the positions of the bulge portions of the rotor 41. Therefore, fields respectively applied from the exciting winding coil We to the output winding coils W1 to W6 change. Thus, voltage signals V1 to V6 based on the rotation angle (electric angle) θe of the rotor 41 as described in the following (b1) to (b6) are output from the output winding coils W1 to W6, respectively. Note that "K" denotes transformer ratio.

(b1) A voltage signal V1 (= Ve×K×sin(θe)) is output from the first output winding coil W1.
(b2) A voltage signal V2 (= Ve×K×sin(θe+30°)) is output from the second output winding coil W2.
(b3) A voltage signal V3 (= Ve×K×sin(θe+120°)) is output from the third output winding coil W3.
(b4) A voltage signal V4 (= Ve×K×sin(θe+150°)) is output from the fourth output winding coil W4.
(b5) A voltage signal V5 (= Ve×K×sin(θe+240°)) is output from the fifth output winding coil W5.
(b6) A voltage signal V6 (= Ve×K×sin(θe+270°)) is output from the sixth output winding coil W6.

In this way, in the first resolver 40, the exciting winding coil We and the rotor 41 may function as a magnetic field generation unit, and the first to sixth output winding coils W1 to W6 may function as a magnetic field detection unit. The six-phase voltage signals V1 to V6 output from the first resolver 40 are input into the ECU 15.

As shown in FIG. 2, the second resolver 50 is provided at the upper end portion of the lower shaft 21. The second resolver 50 detects the rotation angle of the lower shaft 21. The second resolver 50 is formed of a rotor 51 and an annular stator 52. The rotor 51 is fixed to the upper end portion of the lower shaft 21, and integrally rotates with the lower shaft 21. The stator 52 is fixed to the housing 30, and surrounds the rotor 51. Because the second resolver 50 has basically the same structure as that of the first resolver 40, the detailed description is omitted. Note that the multiplication factor of angle of the second resolver 50 is set to "4X". Voltage signals output from the second resolver 50 are also input into the ECU 15.

A planetary gear mechanism 60 is provided at the upper portion of the first resolver 40. As shown in FIG. 4, the planetary gear mechanism 60 is formed of a sun gear 61, an internal gear 62 and a planetary gear 63. The sun gear 61 is fixed to the input shaft 20, and rotates together with the input shaft 20. The internal gear 62 is provided so as to surround the sun gear 61, and is fixed in the housing 30 (not shown). The planetary gear 63 is in mesh with the sun gear 61 and the internal gear 62. Note that the housing 30 is not shown in FIG. 4.

Each of the gears 61 to 63 is formed of a bevel gear. As shown in FIG. 2, the outer periphery of the sun gear 61, on which teeth are formed, has such a shape that the diameter increases toward the first resolver 40. The inner periphery of the internal gear 62, on which teeth are formed, has such a shape that the diameter decreases toward the first resolver 40. With this configuration, a clearance between the sun gear 61 and the internal gear 62 becomes narrower toward the first resolver 40. The planetary gear 63 is in mesh with the sun gear 61 and the internal gear 62 with the distal end portion of the planetary gear 63 oriented downward. With this configuration, movement of the planetary gear 63 toward the first resolver 40 is restricted. Note that the sun gear 61 and the internal gear 62 each are made of a non-magnetic material.

On the other hand, the planetary gear 63 is basically made of a magnetic material, and only part of the planetary gear 63, at which teeth are formed, is molded from resin. By molding the part of the planetary gear 63, at which teeth are formed, from resin, occurrence of abnormal noise between the planetary gear 63 and the sun gear 61 and between the planetary gear 63 and the internal gear 62 is suppressed. A shaft portion 63a is formed on the upper face of the planetary gear 63. The shaft portion 63a is fitted in a groove 33 formed in the inner wall surface of the housing 30.

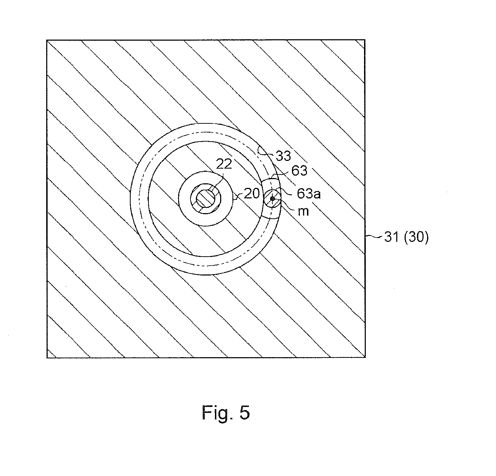

As shown in FIG. 5, the groove 33 is formed in a circular shape along the orbital path of the planetary gear 63. Thus, the planetary gear 63 is supported by the groove 33 so as to be able to revolve around the sun gear 61. In the planetary gear mechanism 60, the number of teeth of the sun gear 61 is set to "40" and the number of teeth of the internal gear is set to "50". As a result, while the sun gear 61 makes one rotation, that is, while the input shaft 20 makes one rotation, the planetary gear 63 makes 5/9 (= 50/(50+40)) revolution around the sun gear 61. With the thus structured planetary gear mechanism 60, it is possible to hold the planetary gear 63 between the housing 30 and the sun gear 61 and between the housing 30 and the internal gear 62. Therefore, it is possible to reliably and accurately the planetary gear 63 without providing a support structure dedicated to the planetary gear.

As shown in FIG. 2, an annular stopper 70 for restricting axial movement of the stator 42 is provided between the stator 42 of the first resolver 40 and the stator 52 of the second resolver 50, and an annular stopper 71 for restricting axial movement of the stator 52 is provided between the stator 52 of the second resolver 50 and the second housing 32.

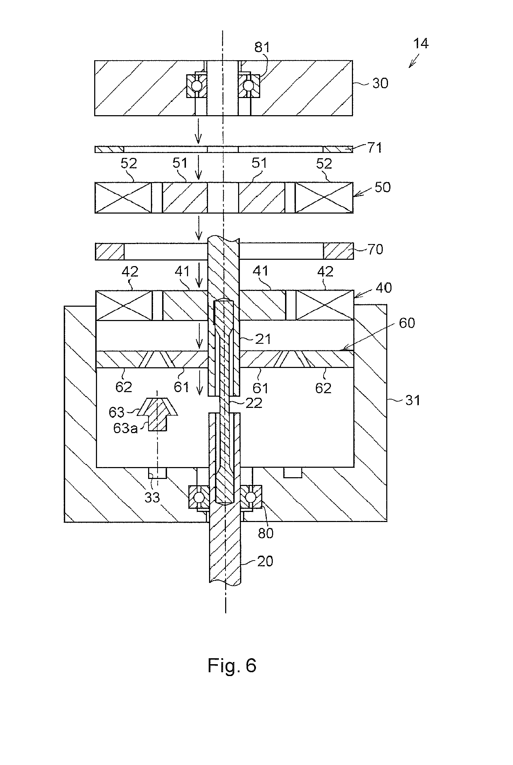

With the above-described structure of the torque sensor 14, as shown in FIG. 6, at the time of assembling the torque sensor 14, if the planetary gear mechanism 60, the first resolver 40, and the like, are sequentially accommodated into the first housing 31 with the opening of the first housing 31 with the opening of the first housing 31 oriented upward, it is possible to easily fit the component elements to the first housing 31. This facilitates the assembly of the torque sensor 14.

The ECU 15 executes known arctangent computation on the basis of two voltage signals among the voltage signals V1 to V6 output from the first resolver 40. In this way, the rotation angle (electric angle) of the rotor 41, that is, the rotation angle (electric angle) $\theta es$ of the input shaft 20, is obtained. In addition, the ECU 15 also executes arctangent computation on the basis of the voltage signals output from the second resolver 50. In this way, the rotation angle (electric angle) $\theta ep$ of the lower shaft 21 is also obtained. Then, the ECU 15 computes the difference between the rotation angle $\theta es$ of the input shaft 20 and the rotation angle $\theta ep$ of the lower shaft 21, and then obtains a steering torque by multiplying the computed difference by the spring constant of the torsion bar 22.

In addition, the ECU 15 obtains the steering angle of the steering wheel 1 by detecting the absolute rotation angle $\theta ea$ of the input shaft 20 on the basis of the voltage signals V1 to V6 output from the first resolver 40. In this way, in the present embodiment, the ECU 15 serves as rotation angle detecting means for detecting the steering angle of the steering wheel 1.

Next, the principle of detection of the absolute rotation angle (electric angle) $\theta ea$ of the input shaft 20 will be described with reference to FIG. 3, FIG. 4 and FIG. 7. The description will be provided on the assumption that when the steering wheel 1 is located at a neutral position, the planetary gear 63 is located at a reference position indicated by long dashed double-short dashed line in FIG. 4. In FIG. 4, a revolving angle is denoted by $\theta p$. The revolving angle $\theta p$ is an angle formed between a line (dashed line in FIG. 4) that connects a revolving axis with the center of the planetary gear 63 at the reference position and a line (dashed line) that connects the revolving axis with the center of the planetary gear 63 at a revolving position when the planetary gear 63 has revolved in a direction indicated by an arrow a from the reference position indicated by the long dashed double-short dashed line in FIG. 4. In addition, FIG. 4 shows the absolute rotation angle (electric angle) $\theta ea$ of the input shaft 20 in the direction indicated by the arrow a from the reference position of the input shaft 20, which is the position of the input shaft 20 when the steering wheel 1 is at the neutral position. Furthermore, FIG. 3 shows the rotation angle $\theta e$ of the rotor 41 in the direction indicated by the arrow a from the reference position of the rotor 41, which is the position of the rotor 41 when the steering wheel 1 is at the neutral position. In addition, in FIG. 3 and FIG. 4, the orbital path of the planetary gear 63 (more specifically, the orbital path of a central axis m of the planetary gear 63) is indicated by long dashed short dashed line.

For example, when the steering wheel 1 is rotated "202.5°" by the driver, the input shaft 20 also rotates "202.5°" in absolute angle (mechanical angle). In this case, as shown in FIG. 4, the revolving angle $\theta p$ of the planetary gear 63 is "90° (= 202.5°×4/9)". Therefore, the planetary gear 63 comes close to the tooth T4 as indicated by long dashed double-short dashed line in FIG. 3. Thus, the magnetic field applied to the sixth output winding coil W6 changes under the influence of the planetary gear 63. Specifically, because magnetic paths around the sixth output winding coil W6 increase, magnetic fluxes applied to the sixth output winding coil W6 increase and a magnetic resistance in the sixth output winding coil W6 decreases. Therefore, the magnitude of the voltage signal V6 output from the sixth output winding coil W6 is larger than the magnitude of a normal voltage signal described in the above (b6), and the voltage signal V6 indicates an abnormal value.

Then, the ECU 15 compares the magnitudes of the voltage signals V1 to V6 of the first to sixth output winding coils W1 to W6 with a predetermined threshold to identify an output winding coil that outputs an abnormal voltage signal, and determines that the planetary gear 63 is located at a position corresponding to the tooth around which the identified output winding coil is wound. According to the above determination method, for example, when the magnitude of the voltage signal output from the sixth output winding coil W6 is larger than the threshold, the ECU 15 determines that the revolving angle $\theta p$ of the planetary gear 63 is "90°" corresponding to the tooth T4 or "270°" corresponding to the tooth T10.

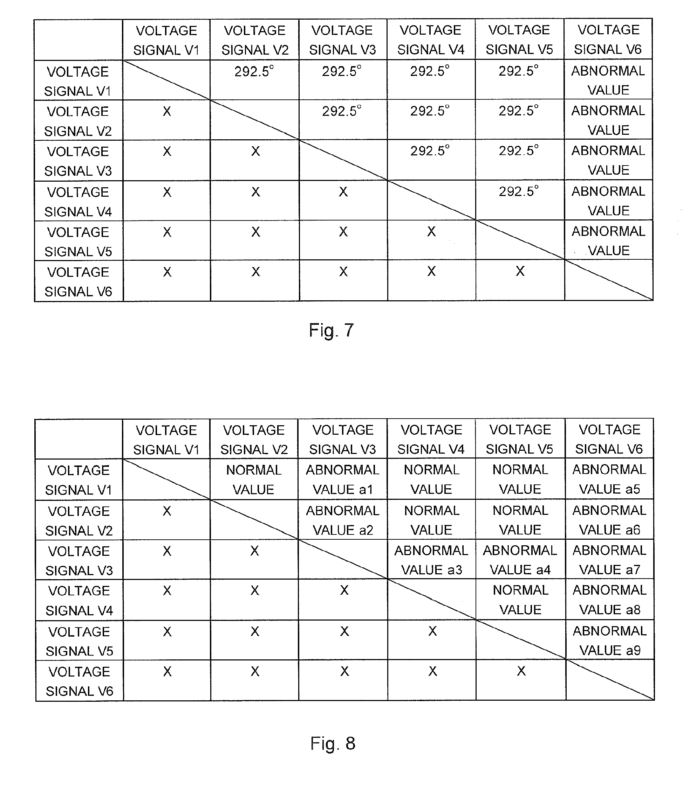

On the other hand, when the input shaft 20 rotates "202.5°" in absolute angle (mechanical angle), in the first resolver 40, the rotation angle (electric angle) $\theta e$ of the rotor 41 shown in FIG. 3 is "1012.5 (= 202.5°×5)". Therefore, the rotation angle (electric angle) $\theta es$ of the input shaft 20, which is computed from a combination of two of the voltage signals V1 to V6 of the first resolver 40, should be usually "292.5° (= 1012° - 360×2°)". However, when the magnitude of the voltage signal V6 output from the sixth output winding coil W6 is abnormal, only the rotation angle $\theta es$ that is computed from a combination with the voltage signal V6 is an abnormal angle. Therefore, as shown in FIG. 7, among the fifteen rotation angles $\theta es$ that are computed from the voltage signals V1 to V6, only the five rotation angles $\theta es$ computed from a combination with the voltage signal V6 are angles other than "292.5°". Therefore, the ECU 15 executes majority operation on the fifteen rotation angles $\theta es$ computed from the voltage signals V1 to V6 of the first resolver 40 to detect a proper rotation angle $\theta es$ of the input shaft 20. That is, when the fifteen rotation angles $\theta es$ as shown

in FIG. 7 are computed, ten rotation angles θes indicate "292.5°", and five rotation angles θes indicate other angles, so it is determined that the rotation angle θes of the input shaft 20 is "292.5°".

For example, when the revolving angle (mechanical angle) θp of the planetary gear 63 is "105°", that is, when the planetary gear 63 is located between the tooth T4 and the tooth T5, the planetary gear 63 comes close to not only the sixth output winding coil W6 but also the third output winding coil W3. Therefore, the voltage signals V3 and V6 indicate abnormal values. In this case, as shown in FIG. 8, among fifteen rotation angles θes computed by the ECU 15, nine rotation angles computed from a combination of the voltage signals V3 and V6 are abnormal values a to i that are different from each other, and the remaining six rotation angles are normal values. Therefore, through a majority operation, it is possible to detect the rotation angle θes of the input shaft 20.

Through the above described determination method, the ECU 15 detects that the revolving angle θp of the planetary gear 63 is "90°" or "270°" in mechanical angle and the rotation angle (electric angle) θes of the input shaft 20 is "292.5°". Then, the ECU 15 computes the absolute rotation angle (electric angle) θea of the input shaft 20, including multiple-turn rotation, from these detection results as follows.

First, the following relational expression indicated by Equation 1 below is established among the absolute rotation angle (electric angle) θea of the input shaft 20, the rotation angle (electric angle) θes of the input shaft 20, which is detected through a majority operation, and the revolving angle (mechanical angle) θp of the planetary gear 63. Note that "Np" denotes the number of revolutions of the planetary gear 63 during one rotation of the input shaft 20, and "Ax" denotes the multiplication factor of angle of the first resolver 40.

$$\theta p = \theta ea \times Np/Ax$$
$$= (\theta es + 360° \times n) \times 4/45 \qquad \text{Equation 1}$$

where n is an integer.

Then, the ECU 15 sequentially changes the value of "n" to obtain "n" at which the revolving angle (mechanical angle) θp of the planetary gear 63 satisfies "90° - Δθ ≤ θp ≤ 90° + Δθ" or "270° - Δθ ≤ θp ≤ 270° + Δθ". Note that "Δθ" is a constant set in advance as an angular range in which the magnitude of the voltage signals V1 to V6 output from the output winding coils W1 to W6 are expected to exceed a threshold, and, in the present embodiment, "7.5°" is employed. Thus, the revolving angle (mechanical angle) θp of the planetary gear 63 is determined through, for example, the following computations (c1) and (c2).

(c1) When n = 1,

$$\theta p = (292.5 + 360° \times 1) \times 4/45 = 58°$$

(c2) When n = 2,

$$\theta p = (292.5 + 360° \times 2) \times 4/45 = 90°$$

When the computation of (c2) is executed, the computed revolving angle (mechanical angle) θp satisfies "90° - Δθ ≤ θp ≤ 90° + Δθ". Therefore, it is found that "n = 2" from the computation result of the computation (c2). That is, it is found that the input shaft 20 is rotated by two periods in the phase of electric angle, that is, the rotational speed of the input shaft 20 is "0.4 (= 2/5)". Thus, the ECU 15 detects that the absolute rotation angle (electric angle) θea of the input shaft 20 is "1012.5 (= 292.5 + 360° × 2)".

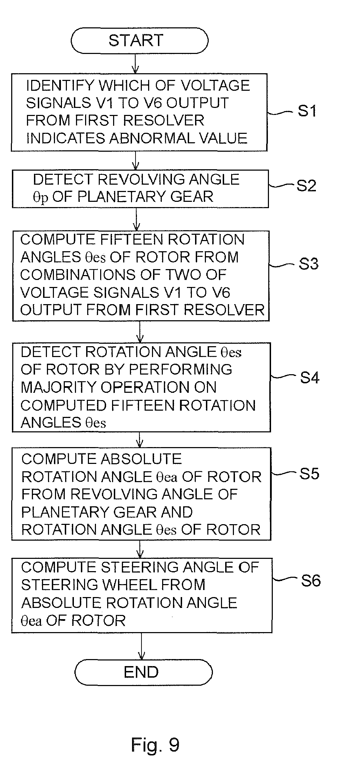

FIG. 9 shows, as a flowchart, a process of computing the steering angle of the steering wheel 1 with the use of the ECU 15 on the basis of the above-described method of detecting the absolute rotation angle (electric angle) θea of the input shaft 20. Hereinafter, an operation example (operation) of the first resolver 40 will be described with reference to FIG. 9. Actually, the process shown in FIG. 9 is repeatedly executed at predetermined computation cycles.

As shown in FIG. 9, in the process, first, it is identified which of the voltage signals V1 to V6 output from the first resolver 40 indicates an abnormal value by comparing the voltage signals V1 to V6 with the predetermined threshold (step S1). The revolving angle (mechanical angle) θp of the planetary gear 63 is detected form the identified result (step S2). Subsequently, fifteen rotation angles (electric angles) θes of the rotor 41 are each computed from combinations of two of the voltage signals V1 to V6 (step S3). By performing a majority operation on the computed fifteen rotation angles (electric angles) θes of the rotor 41, the rotation angle (electric angle) θes of the input shaft 20 is detected (step S4). Subsequently, the absolute rotation angle (electric angle) θea of the input shaft 20 is computed on the basis of the detected revolving angle (mechanical angle) θp of the planetary gear 63 and the detected rotation angle (electric angle) θes of the input shaft 20 (step S5). Specifically, by searching for "n" that satisfies Equation 1, the absolute rotation angle (electric angle) θea of the input shaft 20 is computed. Then, the steering angle (mechanical angle) of the steering wheel 1 is computed on the basis of the multiplication factor of angle of the first resolver 40 from the computed absolute rotation angle (electric angle) θea of the input shaft 20 (step S6).

With the above torque sensor 14, it is possible to detect the steering angle of the steering wheel 1 just by providing the first resolver 40 with the planetary gear mechanism 60. Therefore, in comparison with the case where a rotation speed detection device that detects the rotational speed of the input shaft 20 is provided, it is possible to simplify the structure.

As described above, with the torque sensor according to the present embodiment, the following advantageous effects are obtained.

(1) The first resolver 40 is provided with the planetary gear mechanism 60 includes: the sun gear 61 that rotates together with the input shaft 20; the planetary gear 63 that is made of a magnetic material and that revolves around the sun gear 61 in accordance with the rotation of the sun gear 61; and the internal gear 62 that is in mesh with the planetary gear 63. In addition, the rotation angle θes of the input shaft 20 and the revolving angle θp of the planetary gear 63 are detected on the basis of the voltage signals V1 to V6 respectively output from the first to sixth output winding coils W1 to W6 provided in the first resolver 40. Then, the absolute rotation angle θea of the input shaft 20 is computed on the basis of the rotation angle θes of the input shaft 20 and the revolving angle θp of the planetary gear 63, and the steering angle of the steering wheel 1 is obtained from the computed result. In this way, it is possible to detect the steering angle of the steering wheel 1 just by providing the first resolver 40 with the planetary gear mechanism 60. Therefore, in comparison with the case where a rotation speed detection device that detects the rotational speed of the input shaft 20 is provided, it is possible to simplify the structure.

(2) The revolving angle θp of the planetary gear is detected by identifying which of the voltage signals V1 to V6 respectively output from the first to sixth output winding coils W1 to W6 of the first resolver 40 indicates an abnormal value. Thus, it is possible to easily detect the revolving angle θp of the planetary gear 63.

(3) The rotation angle θes of the input shaft 20 is detected by computing a plurality of rotation angles θes of the input shaft 20 from combinations of two of the voltage signals V1 to V6 output from the first resolver 40 and performing a majority operation on the computed results. In this way, it is possible to easily detect the rotation angle θes of the input shaft 20.

(4) The planetary gear 63 is held between the housing 30 and the sun gear 61 and between the housing 30 and the internal gear 62. Therefore, without providing a member for supporting the planetary gear 63, it is possible to easily and accurately support the planetary gear 63. Therefore, it is possible to simplify the structure.

(5) The steering angle of the steering wheel 1 is detected with the use of the first resolver 40 provided in the torque sensor 14. Therefore, it is not necessary to provide a sensor that detects the steering angle of the steering wheel 1.

Note that the above-described embodiment may be modified into the following alternative embodiments.

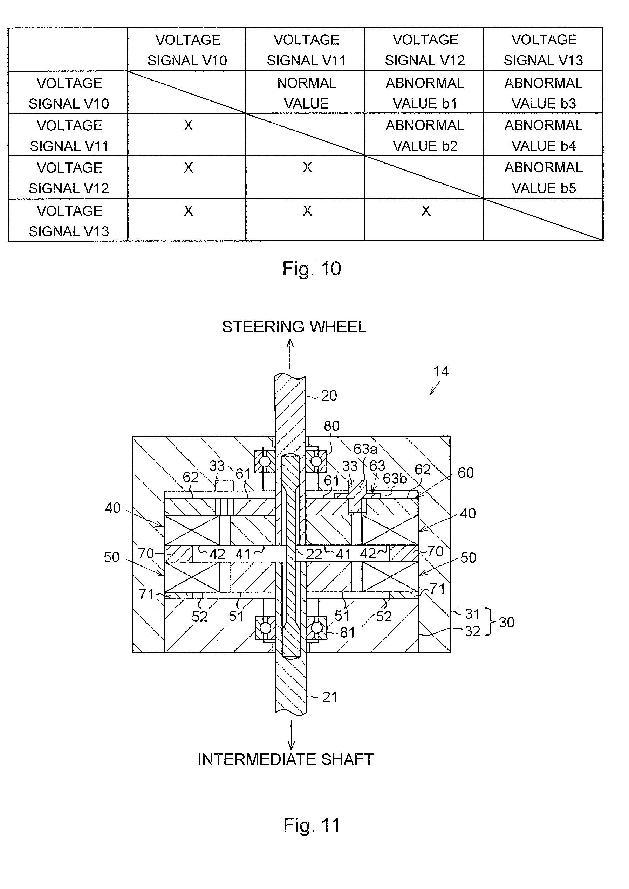

In the above-described embodiment, the first resolver 40 outputs six-phase voltage signals. However, the number of output voltage signals may be changed as needed. However, when the first resolver 40 outputs four or smaller phases voltage signals, there is the following concern that will be described on the assumption that when the first resolver 40 is configured to output four-phase voltage signals V10 to V13, the two voltage signals V12 and V13 among the four-phase voltage signals V10 to V13 indicate abnormal values because the planetary gear 63 is located between the two teeth. In this case, as shown in FIG. 10, among six rotation angles θes that are computed from combinations of two of the four-phase voltage signals V10 to V13, the number of the computed results that indicate abnormal values b1 to b5 is five, and only one computed result indicates a normal value. Therefore, it may not be possible to identify the rotation angle θes of the rotor 41 according to the method of performing a majority operation on the computed results. In addition, in the case where the first resolver 40 has a three-phase output structure, if two voltage signals among the three outputs indicate abnormal values, there is no computed result that indicates a normal value. Therefore, it may also not be possible to identify the rotation angle θes of the rotor 41. Therefore, the number of voltage signals output from the first resolver 40 is desirably larger than or equal to five. Note that, even when the first resolver 40 has a three-phase output structure or four-phase output structure, for example, if the output winding coils are apart from each other, it is possible to avoid a situation where the planetary gear 63 influences two output winding coils. Thus, with the above structure, it is possible to identify the rotation angle θes of the rotor 41 according to the method of performing a majority operation on computed results.

The multiplication factor of angle of the first resolver 40 may be changed as needed.

In the above-described embodiment, the gears 61 to 63 of the planetary gear mechanism 60 each are formed of a bevel gear. Alternatively, as shown in FIG. 11, the gears 61 to 63 each may be formed of a spur gear. In this case, as shown in the drawing, providing a flange portion 63b between a portion, at which the teeth of the planetary gear 63 are formed, and the shaft portion 63a is effective. Because movement of the planetary gear 63 toward the first resolver 40 is restricted by the flange portion 63b, it is possible to accurately keep the position of the planetary gear 63.

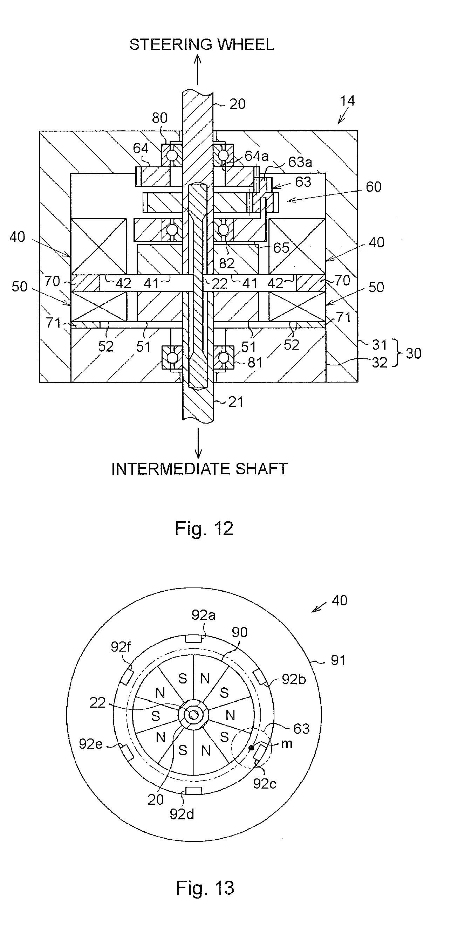

In the above-described embodiment, the internal gear 62 is fixed inside the housing 30, and the planetary gear 63 is in mesh with the internal gear 62. Alternatively, the internal gear 62 may be replaced with an external gear. In addition, the planetary gear may be supported by a planetary carrier such that the planetary gear is rotatable about its axis and revolvable around the sun gear 61. FIG. 12 shows an embodiment in which external teeth are formed on the shaft portion 63a of the planetary gear 63. In addition, an external gear 64 is fixed to a portion of the inner wall of the housing 30 above the sun gear 61. The external gear 64 is in mesh with the external teeth formed on the shaft portion 63a of the planetary gear 63. Note that an insertion hole 64a is formed at the center portion of the external gear 64, and the input shaft 20 is passed through the insertion hole 64a. Further, a planetary carrier 65 that is supported by the input shaft 21 via a bearing 82 is provided below the sun gear 61, and the planetary gear 63 is supported by the planetary carrier 65 such that the planetary gear 63 is rotatable about its axis and revolvable around the sun gear 61. With the above configuration as well, it is possible to revolve the planetary gear 63 in accordance with the rotation of the input shaft 20. Therefore, similar advantageous effects to those of the above-described embodiment are obtained.

In the above-described embodiment, the revolving position of the planetary gear 63 is detected as one of positions of two teeth that face each other, that is, candidate two positions as the revolving position of the planetary gear 63 are detected, and then the absolute rotation angle $\theta$ea of the input shaft 20 is detected through the above computations (c1) and (c2) indicated as an example. Alternatively, it may be further identified which of the positions of the two teeth that face each other is the revolving position of the planetary gear 63. Specifically, as shown in FIG. 3, the situation where the planetary gear 63 comes close to the first output winding coil W1 presumably includes two situations, that is, the situation where the planetary gear 63 comes close to the tooth T1 and the situation where the planetary gear 63 comes close to the tooth T7. Between these two situations, the rotation angle $\theta$e of the rotor 41 is different, and therefore the magnitude of the voltage signal V1 output from the first output winding coil W1 is different. By utilizing this fact, for example, when the output winding coil to which the planetary gear 63 comes close is identified, it is possible to identify at which of the two teeth that face each other the planetary gear 63 is located, on the basis of the magnitude of the voltage signal output from the identified output winding coil. When the position of the planetary gear 63 is identified in this way, it is possible to further accurately detect the absolute rotation angle $\theta$ea of the input shaft 20.

In the above-described embodiment, the gears 61 to 63 of the planetary gear mechanism 60 each are formed of a bevel gear, and the planetary gear 63 is retained by inserting the shaft portion 63a of the planetary gear 63 in the groove 33 formed on the housing 30. Instead of such retainment of the planetary gear 63 by the groove 33 of the housing 30, for example, the planetary gear 63 may be supported by bringing another planetary gear made of a non-magnetic material, other than the planetary gear 63, into mesh with the sun gear 61 and the internal gear 62 and then coupling the other planetary gear to the planetary gear 63 by a planetary carrier.

In the above-described embodiment, the planetary gear 63 is made of a magnetic material. Alternatively, the planetary gear 63 may be made of a non-magnetic material, such as aluminum. The planetary gear 63 may be made of any material as long as the material changes magnetic fields formed by the exciting winding coil We.

In the above-described embodiment, the structure in which the planetary gear 63 makes 4/9 revolution around the sun gear 61 while the input shaft 20 makes one rotation is employed. However, the number of revolutions of the planetary gear 63 may be changed as needed. As long as a structure in which the planetary gear 63 makes a revolution of non-integer numbers around the sun gear 61 while the input shaft 20 makes one rotation is employed, it is possible to detect the absolute rotation angle of the input shaft 20 on the basis of the revolving angle of the planetary gear 63.

In the above-described embodiment, the torque sensor according to the invention is applied to the electric power steering system. However, the invention may be applied to any device that includes a torque sensor. In addition, the invention may be applied to not only a torque sensor but also any resolver that detects the rotation angle of a rotary body.

In the above-described embodiment, the rotation angle detection device according to the invention is applied to the resolver. Alternatively, the invention may be applied to rotation angle detection devices, such as a rotation angle detection device that detects the rotation angle of a rotary body by utilizing, for example, a Hall element or a magnetoresistive element. FIG. 13 shows an example of a rotation angle detection device that utilizes a Hall element. As shown in FIG. 13, the rotation angle detection device has the multiplication factor of angle "5X", and includes a rotor 90 and a stator 91. The rotor 90 is formed of ten-pole magnets, and rotates together with the input shaft 20. The stator 91 is fixed to the housing 30, and surrounds the rotor 90. Six Hall elements 92a to 92f are attached to the inner wall of the stator 91 at equal intervals in the circumferential direction of the rotor 90. The rotation angle detection device detects the rotation angle (electric angle) of the rotor 90, that is, the rotation angle (electric angle) of the input shaft 20, on the basis of outputs from the Hall elements 92a to 92f. In the thus configured rotation angle detection device, when the above-described planetary gear mechanism 60 is provided, it is possible to cause the planetary gear 63 to revolve near the rotor 90 and the Hall elements 92a to 92f when the rotor 90 rotates as indicated by long dashed short dashed line in the drawing. Thus, it is possible to obtain the rotation angle (including the absolute rotation angle larger than or equal to 360 degrees) of the input shaft 20 on the basis of the outputs from the Hall elements 91a to 91f. That is, similar advantageous effects to those of the above-described embodiment are obtained. As long as a rotation angle detection device includes a plurality of magnetic field detection units arranged in a rotation direction of a rotary body and a magnetic field generation unit that generates magnetic fields respectively applied to these magnetic field detection units and detects the rotation angle of the rotary body by detecting changes that occur in the magnetic fields with the rotation of the rotor with the use of the magnetic field detection units, it is possible to apply the rotation angle detection device according to the invention.

**Claims**

1. A rotation angle detection device, comprising:

    a plurality of magnetic field detection units that are arranged along a rotation direction of a rotary body;
    a magnetic field generation unit that generates magnetic fields that are respectively applied to the plurality of magnetic field detection units;
    a sun gear that rotates together with the rotary body; and
    a planetary gear that is made of a material capable of changing the magnetic fields, and that revolves around the sun gear in accordance with rotation of the sun gear, wherein
    the magnetic field generation unit rotates relative to the plurality of magnetic field detection units in accordance with rotation of the rotary body, and
    the planetary gear revolves along an orbital path that corresponds to arrangement of the plurality of magnetic field detection units.

2. The rotation angle detection device according to claim 1, wherein
    a position of the planetary gear with respect to the plurality of magnetic field detection units is detected by identifying which of outputs from the plurality of magnetic field detection units indicates an abnormal value.

3. The rotation angle detection device according to claim 1 or 2, wherein
    a rotation angle of the rotary body is detected by computing a plurality of rotation angles of the rotary body based on outputs from the plurality of magnetic field detection units and then performing a majority operation on the plurality of computed rotation angles.

4. The rotation angle detection device according to claim 3, wherein
    the rotation angle of the rotary body is detected based on combinations of two of the outputs from the plurality of magnetic field detection units, and
    the number of the magnetic field detection units is five or more.

5. The rotation angle detection device according to any one of claims 1 to 4, further comprising:

    a housing that supports the planetary gear such that the planetary gear is revolvable around the sun gear; and
    an internal gear that is provided so as to surround the sun gear and that is in mesh with the planetary gear, wherein
    the planetary gear is held between the housing and the sun gear and between the housing and the internal gear.

6. A torque sensor, comprising:

    a first rotation angle detection device that detects a rotation angle of a first rotary body; and
    a second rotation angle detection device that detects a rotation angle of a second rotary body that is coaxially coupled to the first rotary body via a torsion bar, wherein
    the torque sensor detects a torque that is applied to the first rotary body based on a difference between the rotation angle of the first rotary body and the rotation angle of the second rotary body, and
    the rotation angle detection device according to any one of claims 1 to 5 is used as the first rotation angle detection device.

Fig. 1

STEERING WHEEL

INTERMEDIATE SHAFT

Fig. 2

Fig. 3

Fig. 4

Fig. 5

Fig. 6

| | VOLTAGE SIGNAL V1 | VOLTAGE SIGNAL V2 | VOLTAGE SIGNAL V3 | VOLTAGE SIGNAL V4 | VOLTAGE SIGNAL V5 | VOLTAGE SIGNAL V6 |
|---|---|---|---|---|---|---|
| VOLTAGE SIGNAL V1 | | 292.5° | 292.5° | 292.5° | 292.5° | ABNORMAL VALUE |
| VOLTAGE SIGNAL V2 | X | | 292.5° | 292.5° | 292.5° | ABNORMAL VALUE |
| VOLTAGE SIGNAL V3 | X | X | | 292.5° | 292.5° | ABNORMAL VALUE |
| VOLTAGE SIGNAL V4 | X | X | X | | 292.5° | ABNORMAL VALUE |
| VOLTAGE SIGNAL V5 | X | X | X | X | | ABNORMAL VALUE |
| VOLTAGE SIGNAL V6 | X | X | X | X | X | |

Fig. 7

| | VOLTAGE SIGNAL V1 | VOLTAGE SIGNAL V2 | VOLTAGE SIGNAL V3 | VOLTAGE SIGNAL V4 | VOLTAGE SIGNAL V5 | VOLTAGE SIGNAL V6 |
|---|---|---|---|---|---|---|
| VOLTAGE SIGNAL V1 | | NORMAL VALUE | ABNORMAL VALUE a1 | NORMAL VALUE | NORMAL VALUE | ABNORMAL VALUE a5 |
| VOLTAGE SIGNAL V2 | X | | ABNORMAL VALUE a2 | NORMAL VALUE | NORMAL VALUE | ABNORMAL VALUE a6 |
| VOLTAGE SIGNAL V3 | X | X | | ABNORMAL VALUE a3 | ABNORMAL VALUE a4 | ABNORMAL VALUE a7 |
| VOLTAGE SIGNAL V4 | X | X | X | | NORMAL VALUE | ABNORMAL VALUE a8 |
| VOLTAGE SIGNAL V5 | X | X | X | X | | ABNORMAL VALUE a9 |
| VOLTAGE SIGNAL V6 | X | X | X | X | X | |

Fig. 8

```
          ┌─────────────────┐
          │      START       │
          └─────────────────┘
                   │
                   ▼
   ┌──────────────────────────────┐
   │ IDENTIFY WHICH OF VOLTAGE     │
   │ SIGNALS V1 TO V6 OUTPUT       │──── S1
   │ FROM FIRST RESOLVER           │
   │ INDICATES ABNORMAL VALUE      │
   └──────────────────────────────┘
                   │
                   ▼
   ┌──────────────────────────────┐
   │ DETECT REVOLVING ANGLE        │──── S2
   │ θp OF PLANETARY GEAR          │
   └──────────────────────────────┘
                   │
                   ▼
   ┌──────────────────────────────┐
   │ COMPUTE FIFTEEN ROTATION      │
   │ ANGLES θes OF ROTOR FROM      │
   │ COMBINATIONS OF TWO OF        │──── S3
   │ VOLTAGE SIGNALS V1 TO V6      │
   │ OUTPUT FROM FIRST RESOLVER    │
   └──────────────────────────────┘
                   │
                   ▼
   ┌──────────────────────────────┐
   │ DETECT ROTATION ANGLE θes     │
   │ OF ROTOR BY PERFORMING        │
   │ MAJORITY OPERATION ON         │──── S4
   │ COMPUTED FIFTEEN ROTATION     │
   │ ANGLES θes                    │
   └──────────────────────────────┘
                   │
                   ▼
   ┌──────────────────────────────┐
   │ COMPUTE ABSOLUTE              │
   │ ROTATION ANGLE θea OF ROTOR   │──── S5
   │ FROM REVOLVING ANGLE OF       │
   │ PLANETARY GEAR AND            │
   │ ROTATION ANGLE θes OF ROTOR   │
   └──────────────────────────────┘
                   │
                   ▼
   ┌──────────────────────────────┐
   │ COMPUTE STEERING ANGLE OF     │
   │ STEERING WHEEL FROM           │──── S6
   │ ABSOLUTE ROTATION ANGLE       │
   │ θea OF ROTOR                  │
   └──────────────────────────────┘
                   │
                   ▼
          ┌─────────────────┐
          │       END        │
          └─────────────────┘
```

Fig. 9

| | VOLTAGE SIGNAL V10 | VOLTAGE SIGNAL V11 | VOLTAGE SIGNAL V12 | VOLTAGE SIGNAL V13 |
|---|---|---|---|---|
| VOLTAGE SIGNAL V10 | | NORMAL VALUE | ABNORMAL VALUE b1 | ABNORMAL VALUE b3 |
| VOLTAGE SIGNAL V11 | X | | ABNORMAL VALUE b2 | ABNORMAL VALUE b4 |
| VOLTAGE SIGNAL V12 | X | X | | ABNORMAL VALUE b5 |
| VOLTAGE SIGNAL V13 | X | X | X | |

Fig. 10

STEERING WHEEL

INTERMEDIATE SHAFT

Fig. 11

STEERING WHEEL

Fig. 12

INTERMEDIATE SHAFT

Fig. 13

**REFERENCES CITED IN THE DESCRIPTION**

**Patent documents cited in the description**

• JP 2004245642 A